(19)

Europäisches
Patentamt
European
Patent Office
Office européen
des brevets

(11) **EP 4 632 685 A1**

(12) **EUROPEAN PATENT APPLICATION**

(43) Date of publication:
**15.10.2025 Bulletin 2025/42**

(21) Application number: **24169473.6**

(22) Date of filing: **10.04.2024**

(51) International Patent Classification (IPC):
*G06V 10/26* (2022.01)      *G06V 10/774* (2022.01)
*G06F 18/214* (2023.01)

(52) Cooperative Patent Classification (CPC):
**G06V 10/26; G06V 10/774; G06V 20/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Vainshtein, David
Haifa (IL)**
• **Kimhi, Moshe
Haifa (IL)**

(54) **COMPUTER-IMPLEMENTED METHOD FOR TRAINING AN INSTANCE SEGMENTATION MODEL OF AN OBJECT DETECTOR**

(57)    A method for training an instance segmentation model includes: providing unlabeled images and labeled images representing labeled objects; generating a first image by including one or more of the labeled objects into an unlabeled image, generating a second image by including one or more additional labeled objects into the first image and/or removing at least one of the one or more labeled objects from the first image, generating a third image by spatially augmenting the first image; training the model by: generating a first prediction, a second prediction, and a third prediction by inputting the first image, the second image, and the third image, respectively, into the model; determining an embedding loss of the first prediction and the second prediction, determining a regularization loss of the first prediction and the third prediction, wherein the first prediction represents pseudo-labels, and training the model using the embedding loss and the regularization loss.

**Fig. 4**

EP 4 632 685 A1

EP 4 632 685 A1

**Description**

Prior Art

The ability of robots to manipulate objects relies heavily on their aptitude for visual perception. A machine-learning model may be trained to accomplish this visual perception task. Many approaches for training such a machine-learning model rely on vast labeled datasets. However, annotating (i.e., labeling) sensor data, such as images, is expensive in terms of effort and, thus, costs. Therefore, it may be desired to train a machine-learning model using partially labeled datasets (hence, datasets having labeled as well as unlabeled images).

An approach of training a machine-learning model using a partially labeled dataset is Semi-Supervised Learning (SSL). In SSL, the machine-learning model is trained using the labeled images of the partially labeled dataset and the model then uses its own predictions as pseudo-labels to extract learning signals from the remaining unlabeled images. However, a model which learns from its own (noisy) labels early in training may stagnate rather than generalize.

Disclosure of the Invention

The present disclosure relates to a computer-implemented method for training an instance segmentation model of an object detector. The method allows to significantly reduce an amount of labeled data required while at the same time generalizes to unfamiliar objects. This is achieved by employing Semi-Supervised Learning (SSL) and Learning Through Interaction (LTI).

LTI employs temporal perception by considering temporal changes in a scene which generally requires a lot of effort to annotate the temporal image frames. Although SSL allows to use partially labeled datasets and LTI improves generalization of the model, merely combining both approaches leverages their drawbacks which reinforces noisy labels across entire sequences.

The computer-implemented method disclosed herein combines SSL and LTI in a synergetic manner which eliminates the need for specialized datasets required for LTI by using pseudo-sequences generated using SSL.

According to various embodiments, the method for training an instance segmentation model includes: providing a partially labeled dataset which includes a plurality of labeled images and a plurality of unlabeled images, wherein each labeled image of the plurality of labeled images respectively represents one or more than one labeled object of a plurality of labeled objects, wherein each labeled object of the plurality of labeled objects is associated with a respective label; generating a plurality of image triples, wherein generating a respective image triple of the plurality of image triples includes: generating a first image of the respective image triple by including (e.g., adding) one or more labeled objects of the plurality of labeled objects into an unlabeled image, generating a second image of the respective image triple by including (e.g., adding) one or more additional labeled objects of the plurality of labeled objects into the first image and/or by removing at least one of the one or more labeled objects from the first image, and generating a third image of the respective image triple by spatially augmenting the first image; training the instance segmentation model using each image triple of the plurality of image triples, wherein training the instance segmentation model using a respective image triple of the plurality of image triples includes: generating a first instance segmentation prediction by inputting the first image of the respective image triple into the instance segmentation model, generating a second instance segmentation prediction by inputting the second image of the respective image triple into the instance segmentation model, generating a third instance segmentation prediction by inputting the third image of the respective image triple into the instance segmentation model, determining a first loss value representing an embedding (contrastive) loss of the first instance segmentation prediction and the second instance segmentation prediction, determining a second loss value representing a regularization loss of the first instance segmentation prediction and the third instance segmentation prediction, wherein the first instance segmentation prediction represents pseudo-labels, and training the instance segmentation model using the first loss value and the second loss value.

Illustratively, the method allows to train a model to learn by observing scene alterations and leverage visual consistency despite temporal gaps and without requiring curated data of interaction sequences.

In the following, various examples are described.

Example 1 is the method for training an instance segmentation model as described above.

In Example 2, generating the first image of the respective image triple includes: augmenting at least one (e.g., each) of the one or more labeled objects prior to inclusion into the unlabeled image; and/or wherein generating the second image of the respective image triple by including the one or more additional labeled objects includes: augmenting at least one (e.g., each) of the one or more additional labeled objects prior to inclusion into the first image. As detailed herein, optionally generating the second image may further include augmenting the first image itself (e.g., after including and/or removing at least one object). Illustratively, not only the included objects but also the image itself may be augmented.

Augmenting an (labeled) object which is to be included into the first image improves the capability of the trained model to generalize on unfamiliar objects.

In Example 3, the subject matter of Example 2 can optionally include that augmenting the at least one labeled object of the one or more labeled objects and/or at least one labeled object of the one or more additional labeled objects includes one or more of: changing a scale and/or a position and/or a color of the at least one labeled object, rotating and/or cropping the at least one labeled object, and/or flipping the at least one labeled object.

In Example 4, the subject matter of any one of Examples 1 to 3 can optionally include that the plurality of labeled images includes a first number of images and the plurality of unlabeled images includes a second number of images, wherein the second number is at least nine times the first number.

As detailed above, the method allows to significantly reduce the amount of required labeled data. In some aspects, the number of labeled images within the partially labeled dataset may be equal to or less than 10% (e.g., equal to or less than 1%). The method disclosed herein allows to train the model on a partially labeled dataset having a number of labeled images equal to or less than 1 % (i.e., 99% of the images being unlabeled), e.g., having a number of labeled images equal to or less than 0.5% (i.e., 99.5% of the images being unlabeled).

In Example 5, the subject matter of any one of Examples 1 to 4 can optionally include that including (e.g., adding) a respective object of the one or more labeled objects into the unlabeled image and/or a respective object of the one or more additional labeled objects into the first image includes: determining a position at which the respective object is to be included according to a predefined probability distribution, and including (e.g., adding) the respective object at the position.

In Example 6, the subject matter of any one of Examples 1 to 5 can optionally include that including (e.g., adding) a respective object of the one or more labeled objects into the unlabeled image and/or a respective object of the one or more additional labeled objects into the first image includes: determining a position at which the respective object is to be included such that a respective overlap between the respective object and each object represented by the unlabeled image is equal to or less than a predefined threshold value, and including (e.g., adding) the respective object at the position.

Including (e.g., inserting) objects into a scene may lead to significant occlusions and may even conceal the objects which are to be learned. Therefore, including the objects such that an overlap is less than a threshold (see Example 6) and/or based on a distribution considering positions of objects within the scene (see Example 5) reduces the occlusion of objects in the scene and, thus, improves the visual perception capability of the trained model.

In Example 7, the subject matter of any one of Examples 1 to 6 can optionally include that spatially augmenting the first image includes one or more of: a color jitter, a Planckian jitter, a Gaussian blur, and/or changing a color scale (e.g., converting the first image into gray-scale, remapping the color scheme, inverting the color scheme, etc.).

In Example 8, the subject matter of any one of Examples 1 to 7 can optionally include that the first instance segmentation prediction includes a plurality of class labels with a respective class label of the plurality of class labels for each object instance of a plurality of object instances, wherein the respective class label is associated with a corresponding prediction-score; wherein training the instance segmentation model using the respective image triple further includes: determining a first subset of class labels from the plurality of class labels which have a corresponding prediction-score equal to or greater than a predefined prediction-score threshold value, and determining, from the first subset of class labels, a second subset of class labels according to a predefined quantile of highest prediction-scores, wherein the second subset of class labels represents class labels of the pseudo-labels; and wherein the predefined prediction-score threshold value and the predefined quantile increase during training the instance segmentation model.

In Example 9, the subject matter of any one of Examples 1 to 7 can optionally include that the first instance segmentation prediction includes a plurality of class labels with a respective class label of the plurality of class labels for each object instance of a plurality of object instances, wherein the respective class label is associated with a corresponding prediction-score; wherein training the instance segmentation model using the respective image triple further includes: determining, from the plurality of class labels, a first subset of class labels according to a predefined quantile of highest prediction-scores, and determining a second subset of class labels from the first subset of class labels which have a corresponding prediction-score equal to or greater than a predefined prediction-score threshold value, wherein the second subset of class labels represents class labels of the pseudo-labels; and wherein the predefined prediction-score threshold value and the predefined quantile increase during training the instance segmentation model.

Examples 8 and 9 use a combination of a predefined prediction-score threshold value and a predefined quantile which is dynamically adapted during training. Filtering pseudo-labels using such a dynamic threshold prediction condition allows to discard low-quality predictions, thereby improving the average precision of the trained instance segmentation model.

In Example 10, the subject matter of any one of Examples 1 to 9 can optionally include that the first instance segmentation prediction includes a respective mask and a respective bounding box for each object instance of a plurality of object instances; wherein training the instance segmentation model using the respective image triple further includes: for each object instance, determining a respective pseudo-bounding box bounding the respective mask, wherein the pseudo-label of a respective object instance includes the respective pseudo-bounding box.

It has been found that the instance segmentation model learns to predict high quality masks well before it becomes effective at predicting bounding boxes. Therefore, determining a pseudo-bounding box from the mask predicted by the instance segmentation model and using this pseudo-bounding box for training (instead of the bounding box predicted by the instance segmentation model) stabilizes the bounding-box prediction during early self-supervised learning, thereby overcoming a main obstacle of SSL.

In Example 11, the subject matter of any one of Examples 1 to 10 can optionally include that the first instance segmentation prediction includes a respective prediction for each object instance of a first plurality of object instances; wherein the second instance segmentation prediction includes a respective prediction for each object instance of a second plurality of object instances; wherein the third instance segmentation prediction includes a respective prediction for each object instance of a third plurality of object instances; wherein, during training of the instance segmentation model, no non-maximum suppression is applied to the first plurality of object instances and/or the second plurality of object instances and/or the third plurality of object instances.

A common practice in image detection and segmentation is to apply non-maximum suppression (NMS) to eliminate redundant predictions. It has been found that not using NMS and, hence, extracting additional learning signals from duplicate predictions of a same object (rather than retaining only one per object) increases the average precision of the trained model.

Example 12 is a method for controlling a robot device including: training an instance segmentation model according to the method of any one of Examples 1 to 11; acquiring an (e.g., camera) image showing one or more objects; feeding the image into the instance segmentation model to detect the one or more objects; and controlling the robot device taking into account the detected one or more objects (e.g., controlling the robot device to grip an object of the one or more objects).

Example 13 is a data processing device configured to carry out the method of any one of Examples 1 to 11.

Example 14 is a computer program including instructions which, when executed by a computer, causes the computer to carry out the method according to any one of Examples 1 to 11.

Example 15 is a computer-readable (e.g., non-volatile and/or non-transitory memory) medium including instructions which, when executed by a computer, causes the computer to carry out the method according to any one of Examples 1 to 11.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a robot device arrangement according to various aspects;
Figure 2 shows a flow diagram of a method for training a machine-learning model according to various aspects;
Figure 3 illustrates an exemplary determination of an instance bank according to various aspects;
Figure 4 illustrates a flow diagram of training the machine-learning model according to various aspects; and
Figure 5 shows an exemplary distribution used for including objects into an image according to various aspects.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

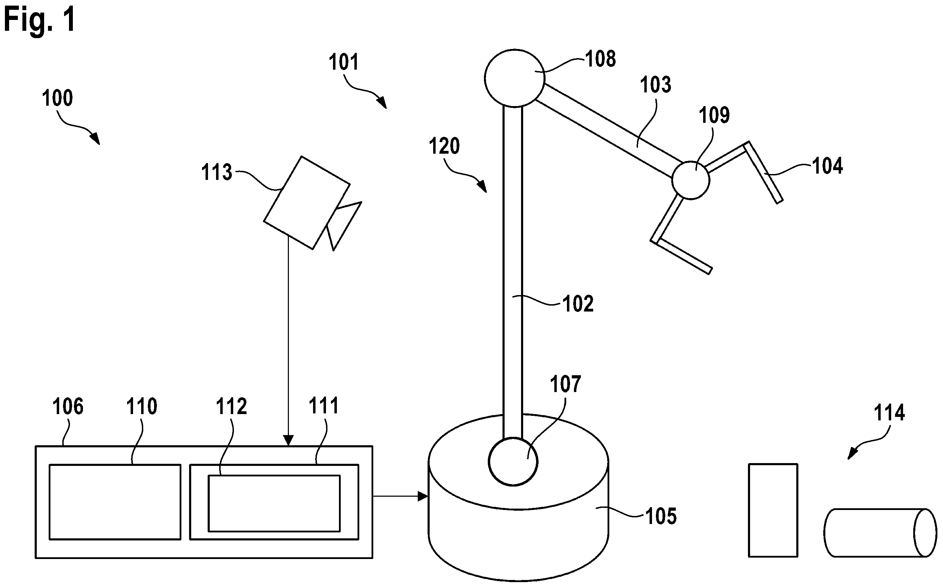

**FIG.1** shows a robot device arrangement 100 according to various aspects. The robot device arrangement 100 may include a robot device 101 (short: robot). The robot device 101 shown in FIG.1 and described below by way of example is an exemplary robot device serving for illustration and may include, for example, an industrial robot in the form of a robot arm 120 for moving, assembling or machining a workpiece, for bin-picking, etc. It is noted that this robot device serves for illustration and may, in general, be any type of computer-controlled device, such as a robot (e.g., a manufacturing robot, a maintenance robot, a domestic robot, a medical robot, etc.), a vehicle (e.g., an autonomous vehicle), a domestic appliance, a production machine, a personal assistant, an access control system, etc., as well as any other type of robot device.

The robot arm 120 may include manipulators 102, 103, 104 and a base (or generally a support) 105 by which the manipulators 102, 103, 104 are supported. The term "manipulators" may refer to the movable parts of the robot device 101 whose actuation enables physical interaction with the environment, e.g. to carry out a task, e.g. to carry out one or more skills of the robot device 101.

For control of the robot device 101, the robot device arrangement 100 may include a (robot) controller 106 configured to implement the interaction with the environment according to a control program. The last manipulator 104 (furthest from the support 105) of the manipulators 102, 103, 104 is also referred to as end-effector 104 and may include one or more tools such as a grasping (or gripping) tool. The grasping tool may also be a suction device (e.g. a suction head) or the like.

The other manipulators 102, 103 (closer to the support 105) may form a positioning device such that, together with the end-effector 104, the robot arm 120 with the end-effector 104 at its end is provided. The robot arm 120 may be a mechanical arm that can provide similar functions as a human arm.

The robot arm 120 may include joint elements 107, 108, 109 interconnecting the manipulators 102, 103, 104 with each other and with the support 105. A joint element 107, 108, 109 may have one or more joints, each of which may provide rotary motion (i.e. rotational motion) and/or translatory motion (i.e. displacement) to associated manipulators relative to each other. The movement of the manipulators 102, 103, 104 may be initiated by means of actuators controlled by the controller 106.

The term "actuator" may be understood as a component adapted to affect a mechanism or process in response to be driven. The actuator may implement instructions issued by the controller 106 (the so-called activation) into mechanical movements. The actuator, e.g. an electromechanical converter, may be configured to convert electrical energy into mechanical energy in response to driving.

The term "controller" may be understood as any type of logic implementing entity, which may include, for example, a circuit and/or a processor capable of executing software stored in a storage medium, firmware, or a combination thereof, and which can issue instructions, e.g. to an actuator in the present example. The controller may be configured, for example, by program code (e.g., software) to control the operation of a system, a robot in the present example.

In the present example, the controller 106 may include one or more processors 110 and a memory 111 storing code and data based on which the processor 110 controls the robot arm 120. According to various embodiments, the controller 106 controls the robot arm 120 on the basis of a machine-learning model (e.g. a machine-learning model trained as detailed herein) 112 stored in the memory 111.

For example, the robot's task is to perform bin-picking, i.e. grasp an object of multiple objects 114 (wherein grasping also includes picking up the object 114 with a suction cup) and, for example, show the object 114 to a scanner or move the object 114 to another bin. To be able to determine the object 114 to pick up and to determine a suitable grasping location on the object 114, the controller 106 may use images of the robot's workspace where the objects 114 are located. These images may be provided by one or more imaging sensors 113 (e.g., attached to the robot arm 120 or in any other way such that the controller 106 may control the viewpoint of the one or more imaging sensors 113).

An imaging sensor, as used herein, may be, for example, a camera (e.g., a standard camera, a digital camera, an infrared camera, an array of cameras, an event camera, a stereo camera, etc.), a radar sensor, a LIDAR sensor, an ultrasound sensor, etc. Thus, an image may be an RGB image, an RGB-D image, or a depth image (also referred to as a D image). A depth image described herein may be any type of image that includes depth information. Illustratively, a depth image may have 3-dimensional information about one or more objects. For example, a depth image described herein may include a point cloud provided by a LIDAR sensor and/or a radar sensor. For example, a depth image may be an image with depth information provided by a LIDAR sensor.

The controller 106 may be configured to control the robot arm 120 based on an output of the machine-learning model 112 responsive to inputting the image into the machine-learning model 112.

The machine-learning model 112 may be an object detector trained to accomplish this visual perception. According to various, the machine-learning model 112 may be or may include an instance segmentation model. The instance segmentation model may be a prediction model for predicting instance segmentations. An instance segmentation of an input image may include an instance prediction for each pixel of the input image. The machine-learning model 112 may be the object detector capable to detect instances (i.e., has an instance detection capability) employing the instance segmentation predicted by the instance segmentation model. Instance detection may provide (e.g., indicate) a position (e.g., given in pixel coordinates) and/or a bounding box of an (object) instance in the input image.

Various aspects refer to training such an instance segmentation model using a partially labeled dataset. The instance segmentation model may be generated (e.g., learned or trained) while the robot device 101 is inoperative. The generated machine-learning model 112 may be then used during operation of the robot device 101 to determine skills to be performed by the robot device 101. Optionally, the generated machine-learning model 112 may be additionally trained during operation of the robot device 101.

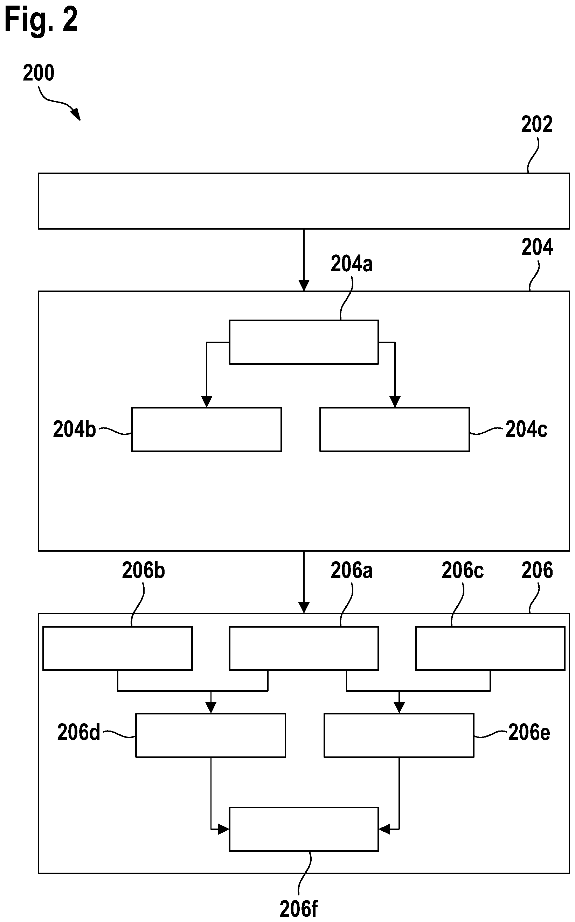

**FIG.2** shows a flow diagram of a (computer-implemented) method 200 for training the machine-learning model according to various aspects.

The method 200 may include (in 202) providing a partially labeled dataset which includes a plurality of labeled images and a plurality of unlabeled images. Each labeled image of the plurality of labeled images may respectively represent one or more than one labeled object of a plurality of labeled objects. Each labeled object of the plurality of labeled objects may be associated with a respective label.

The method 200 may include (in 204) generating a plurality of image triples. Generating a respective image triple of the plurality of image triples may include: generating a first image of the respective image triple by including one or more labeled objects of the plurality of labeled objects into an unlabeled image (in 204a), generating a second image of the respective image triple by including one or more additional labeled objects of the plurality of labeled objects into the first image and/or by removing at least one of the one or more labeled objects from the first image (in 204b), and generating a third image of the respective image triple by spatially augmenting the first image (in 204c).

The method 200 may include (in 206) training the instance segmentation model using each image triple of the plurality of image triples. Training the instance segmentation model using a respective image triple of the plurality of image triples may include: generating a first instance segmentation prediction by inputting the first image of the respective image triple into the instance segmentation model (in 206a), generating a second instance segmentation prediction by inputting the second image of the respective image triple into the instance segmentation model (in 206b), generating a third instance segmentation prediction by inputting the third image of the respective image triple into the instance segmentation model (in 206c), determining a first loss value representing an embedding (contrastive) loss of the first instance segmentation prediction and the second instance segmentation prediction (in 206d), determining a second loss value representing a regularization loss of the first instance segmentation prediction and the third instance segmentation prediction, wherein the first instance segmentation prediction represents pseudo-labels (in 206e), and training the instance segmentation model using the first loss value and the second loss value (in 206f).

In the following, various aspects of the method 200 are described in further detail.

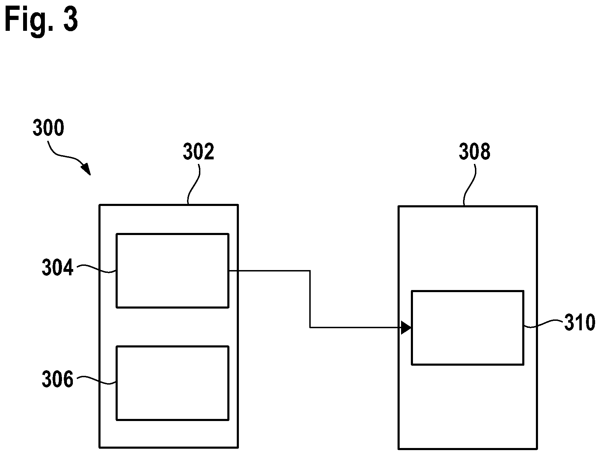

The method 200 may include a supervised learning stage and a self-supervised learning stage. In the supervised learning stage, the instance segmentation model may be trained using the labeled images 304 of the partially labeled dataset 302. With reference to FIG.3, the method 200 may include adding labeled objects 310 (in some aspects referred to as labeled instances) to an instance bank 308. Each labeled object may be associated with an object in a labeled image and a corresponding label. Hence, while operating on the labeled images 304, the object instances that are successfully segmented by the instance segmentation model may be stored in the instance bank 308 (as labeled objects 310).

The instance segmentation model may be any kind of instance segmentation model capable for instance segmentation of images. As an example, the instance segmentation model may include a feature extractor for feature extraction of an input image, a feature decoder (e.g., including three decoding heads) that predicts a respective class, a respective bounding box and a respective mask for each object instance i, and an embedding decoder capable to learn object queries. As one exemplary embodiment, the feature extractor may be a Resnet50, a Resnet101, or a Swin-L network, the embedding decoder may be a deformable DETR network, and the feature decoder may include a feed-forward network for predicting the class, a feed-forward network for predicting the bounding box, and a feature-pyramid-network for predicting the mask. It is understood that this is a mere example and that the instance segmentation model may have any other configuration.

Training the instance segmentation model using labeled objects 310 may employ a supervised loss, $\mathcal{L}_s$ , with:

$$\mathcal{L}_s = \mathcal{L}_{cls} + \lambda_1 \mathcal{L}_{box} + \lambda_2 \mathcal{L}_{mask} \qquad (1),$$

wherein $\mathcal{L}_{cls}$ is a class loss, $\mathcal{L}_{box}$ is a bounding box loss, $\mathcal{L}_{mask}$ is a mask loss, and $\lambda_1$ and $\lambda_2$ are loss coefficients.

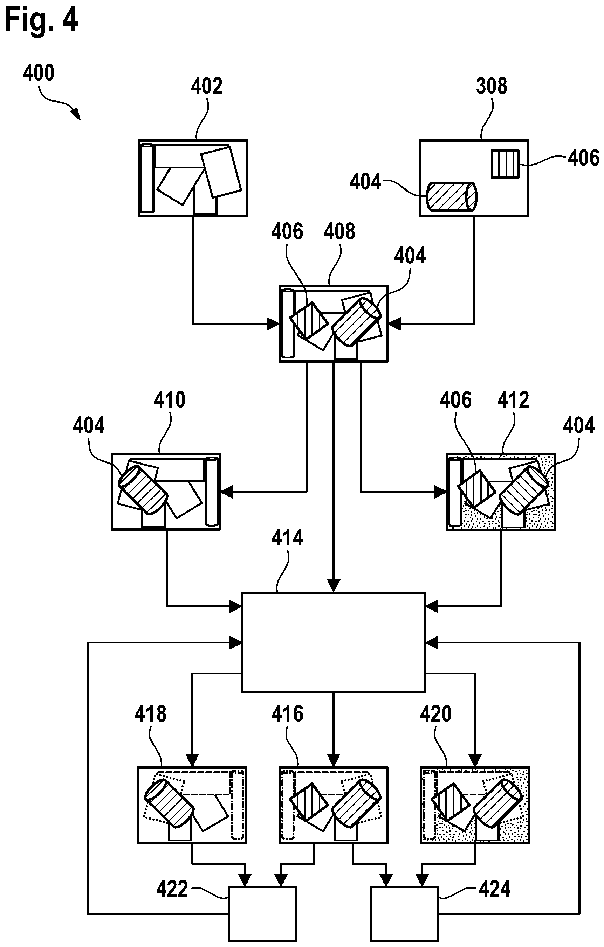

The self-supervised learning stage may employ this instance bank 308. In the self-supervised learning stage, the instance segmentation model is trained using the unlabeled images 306 of the partially labeled dataset 302. **FIG.4** illustrates a flow diagram 400 of an iteration of the self-supervised learning stage using an unlabeled image 402 of the unlabeled images 306.

According to various aspects, an image triple including a first image 408, a second image 410, and a third image 412 may be generated.

The first image 408 may be generated by including (e.g., adding) one or more labeled objects, such as a first object 404 and a second object 406, from the instance bank 308 into the unlabeled image 402. Optionally, the first object 404 and/or the second object 406 may be augmented prior to their inclusion into the unlabeled image 402. This augmentation may be a "minor" augmentation, such as changing a scale and/or a position and/or a color of the labeled object, rotating and/or cropping the labeled object, and/or flipping the labeled object, etc.

The second image 410 may be generated by including (e.g., adding) one or more additional labeled objects from the instance bank 308 into the first image 408 and/or by removing at least one of the one or more labeled objects, such as the second object 406, from the first image 408. Optionally, their may be also a "minor" augmentation of the second image 410 (e.g., a flipping as shown in FIG.4). Illustratively, in addition to the included object(s), the image itself may be augmented when generating the second image 406.

The third image 412 may be generated by spatially augmenting the first image 408. The spatial augmentation may be considered as a "major" augmentation and may be a color jitter, a Planckian jitter, a Gaussian blur, and/or changing a color scale (e.g., converting the first image into gray-scale, remapping the color scheme, inverting the color scheme, etc.), etc. Thus, a degree of (e.g., spatial) augmentation applied to the third image 412 may be greater than a degree of (e.g., temporal) augmentation applied to the first image 408 and the second image 410.

Illustratively, a first image pair (in some aspects referred to as temporal image pair) including the first image 408 and the second image 410 may represent temporal alterations to a scene, and a second image pair (in some aspects referred to as spatial image pair) including the first image 408 and the third image 412 may represent spatial changes to the scene. With reference to the illustrative example of the robot device arrangement 100, the temporal image pair may represent an interaction of the robot arm 120 with the scene. For example, the first image 408 may represent the scene prior to the interaction of the robot arm 120 with the scene and the second image 410 may represent the scene after interaction of the robot arm 120 with the scene, wherein the interaction includes adding an object to the scene (e.g., into a bin) and/or removing an object from the scene (e.g., picking from the bin). The approach disclosed herein allows to train a corresponding model using still-images which are augmented (e.g., using an instance bank) to mimic the interaction of the robot arm 120 with the scene (thereby lowering the barrier of entry). The spatial image pair, on the other hand, may represent other (spatial) changes to scene such as changes to lighting, shadows, occlusions, etc.

Including (e.g., inserting) objects into a scene may lead to significant occlusions and even conceal the objects which are to be learned. According to various aspects, an object may be included into an image (e.g., to generated the first image 408 and/or the second image 410) stochastically according to a probability distribution, $Beta(\alpha,\beta)$. A top-left corner, $(u, v)$, where the object is inserted may be determined using the probability distribution, $Beta(\alpha, \beta)$, according to:

$$(u, v) = Beta(\alpha, \beta) \cdot [w, h] \qquad (2),$$

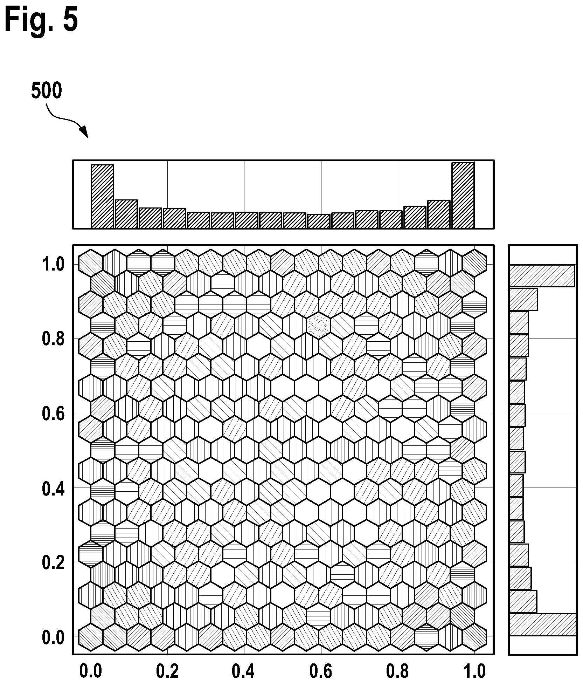

wherein w and h are the feasible horizontal and vertical regions, respectively, that ensure that the object is contained within the image. An exemplary probability distribution 500 is shown in **FIG.5.** For example, a Beta(0.5, 0.5) distribution, which seeks to preserve most of the information in the image by implanting objects at the periphery of the image (rather than occlude objects that are often at the center of the input image). Furthermore, when inserting more than one object from the instance bank, the method may ensure that an overlap with previously inserted objects does not exceed a predefined threshold value.

The instance segmentation model 414 may then be trained using the image triple. Illustratively, a learning signal is computed by forwarding the image triple into the instance segmentation model 414. The instance segmentation model 414 may then output:

- a first instance segmentation prediction 416 responsive to inputting the first image 408 into the instance segmentation model 414.
- a second instance segmentation prediction 418 responsive to inputting the second image 410 into the instance segmentation model 414, and
- a third instance segmentation prediction 420 responsive to inputting the third image 412 into the instance segmentation model 414.

The method 200 may then include (in 206d) the determination of the first loss value 422 which represents an embedding (contrastive) loss, $\mathcal{L}_{embed}$, between the first instance segmentation prediction 416 and the second instance segmentation prediction 418 (i.e., the predictions associated with the temporal image pair). The embedding (contrastive) loss, $\mathcal{L}_{embed}$, may be determined as detailed in T. Chen et al.: "A Simple Framework for Contrastive Learning of Visual Representations", In Proceedings of the 37th International Conference on Machine Learning, p. 1597-1607, 2020. The embedding (contrastive) loss, $\mathcal{L}_{embed}$, may pull pulls corresponding (i.e., same-instance) embeddings closer together while pushing apart representations of different instances.

This (LTI) approach leverages a temporal learning signal by enforcing consistency between the embedding of the temporal image pair. Illustratively, the model aims to produce similar representations for the same objects despite changes to lighting, shadows, occlusions, deformation, articulation, etc.

The method 200 may then include (in 206e) the determination of the second loss value 424 which represents a regularization loss, $\mathcal{L}_u$, of the first instance segmentation prediction 416 and the third instance segmentation prediction 420. According to various aspects, the first instance segmentation prediction 416 may represent pseudo-labels. Thus, class labels, bounding boxes and segmentation masks of the instances in the first image 408 may be treated as pseudo-label targets (in absence of ground truth information of the unlabeled images). This regularization loss, $\mathcal{L}_u$, may be similar to the supervised loss, $\mathcal{L}_s$ (see equation (1)), with the difference that pseudo-labels are used instead of (or as) ground-truth labels.

It has been found that instance segmentation model 414 learns to predict high quality masks well before it becomes effective at predicting bounding boxes. Therefore, according to various aspects, a pseudo-bounding box may be determined from a predicted mask and the pseudo-bounding box may then be used during training (instead of the predicted bounding box). This pseudo-bounding box, may be determined to bound the pixels u, v of the predicted mask by:

$$\hat{b}_i = [\min_u \hat{m}_i \ \min_v \hat{m}_i \ \max_u \hat{m}_i \ \max_v \hat{m}_i] \qquad (3),$$

This approach may be referred to as mask-to-box approach.

Optionally, the pseudo-class-labels (hence, part of the first instance segmentation predictions 416) may be filtered to only select some of them as pseudo-class ground-truth-information. This may reduce the model's exposure to errors during self-supervised learning.

In general, a predefined prediction-score threshold value (to filter out pseudo-class-labels having a prediction-score below the predefined prediction-score threshold value) or a predefined quantile of highest prediction-scores may be used for pseudo-class-labels filtering. However, when using the predefined prediction-score threshold value, the model may during early iterations of the self-supervised training emit most of its predictions slightly below the threshold, resulting in very few labels contributing towards learning. On the other hand, quantiles ignore the scores completely and allow through any prediction, provided that its score meets the rank requirement of the quantile. Because most models output a fixed number of predictions to accommodate crowded scenes (e.g., exceeding 300 predictions), a quantile may become too lenient and include low-score predictions of poor-quality, potentially degrading the model's performance as the training progresses.

According to various aspects, a combination of a predefined prediction-score threshold value and a predefined quantile of highest prediction-scores is used for filtering out pseudo-class-labels. It has been found that this improves the average precision significantly. The greatest improvement is found when pre-filtering the pseudo-class-labels using the predefined prediction-score threshold value first and applying the predefined quantile of highest prediction-scores subsequently on the pre-filtered pseudo-class-labels. The resulting pseudo-class-labels, $\hat{y}_i$, may be determined by:

$$\hat{y}_i = Q(\hat{c}_i > \gamma_t^{cls}; p_t) \qquad (4),$$

wherein $\hat{c}_i$ is the prediction-score of a predicted class label for instance i, $\gamma_t^{cls}$ is the predefined prediction-score threshold value, and $Q(p_t)$ is the predefined quantile.

According to various aspects, the predefined prediction-score threshold value, $\gamma_t^{cls}$, and/or the predefined quantile, $Q(p_t)$, may be dynamically changed during training. This allows to discard low-quality predictions, thereby improving the average precision of the trained instance segmentation model. The predefined prediction-score threshold value and the predefined quantile may increase during training the instance segmentation model 414. As an example, the probability $p_t$ of the predefined quantile may decay according to: $p_t = 0.995 \cdot \left(1 - \frac{t}{T}\right)$ with t being a respective training iteration and T being the total number of training iterations. As a result, the predefined prediction-score threshold value filters more pseudo-class-labels which are deemed unusable and the quantile allows more predictions into the model as training progresses. This strategy has the advantage of mitigating incorrect model beliefs and reducing confirmation biases. The dynamically changed predefined quantile, $Q(p_t)$, may also be referred to as predefined and dynamic quantile.

As detailed herein, all labels which are not filtered may be used for training (i.e., considered in the loss). Illustratively, no NMS may be applied, thereby extracting additional learning signals from duplicate predictions of a same object which increases the average precision of the trained model. This approach may be referred to as multi-label matching approach.

The instance segmentation model 414 may then (in 206f) be trained using the first loss value 422 and the second loss value 424. According to various aspects, a total loss value, $\mathcal{L}_{total}$, may be determined using the first loss value 422 and the second loss value 424 and the instance segmentation model 414 may be trained to reduce (e.g., minimize) the total loss value, $\mathcal{L}_{total}$. The total loss value, $\mathcal{L}_{total}$, may be given by:

$$\mathcal{L}_{total} = \mathbb{I}[y \neq \emptyset]\mathcal{L}_s + \lambda_3\mathcal{L}_{embed} + \lambda_4\mathcal{L}_u \qquad (5),$$

wherein $\mathbb{I}[y \neq \emptyset]$ indicates that the supervised loss, $\mathcal{L}_s$, is only used for labeled objects (since the unsupervised regularization loss, $\mathcal{L}_u$, is used for the unlabeled objects), and $\lambda_3$ and $\lambda_4$ are loss coefficients. Thus, the total loss, $\mathcal{L}_{total}$,

may include regularization loss (e.g., including a classification loss, a box regression loss, a mask loss) and an embedding loss which enhances the model's predictive competency despite the (strong) visual modifications applied in the third image 412.

A method for controlling a robot (e.g., the robot device 101) may include acquiring an image (e.g., using one or more imaging sensors as described herein) which shows one or more objects (in the vicinity of the robot device 101). The method for controlling the robot may include feeding the image into a robot control model (e.g., including the machine-learning model) to detect the one or more objects and controlling the robot (e.g., the robot arm 120) taking into account the detected one or more objects (e.g., controlling the robot arm 120 to pick up (e.g., grip) an object of the one or more objects).

While in the above embodiments, the approach of FIG.2 is applied to control the robot arm 120, it may be applied for computing a control signal for controlling any technical system in a scenario where object hierarchy plays a role, like e.g. a computer-controlled machine, like a robot, a vehicle, a domestic appliance, a power tool, a manufacturing machine, a personal assistant or an access control system.

**Claims**

1. A computer-implemented method (200) for training an instance segmentation model (414) of an object detector, the method (200) comprising:

   • providing (202) a partially labeled dataset (302) which comprises a plurality of labeled images (304) and a plurality of unlabeled images (306), wherein each labeled image of the plurality of labeled images (304) respectively represents one or more than one labeled object of a plurality of labeled objects (310), wherein each labeled object of the plurality of labeled objects (310) is associated with a respective label;
   • generating (204) a plurality of image triples, wherein generating a respective image triple of the plurality of image triples comprises:

      ◦ generating (204a) a first image (408) of the respective image triple by including one or more labeled objects (404, 406) of the plurality of labeled objects (310) into an unlabeled image (402),
      ◦ generating (204b) a second image (410) of the respective image triple by including one or more additional labeled objects of the plurality of labeled objects (310) into the first image (408) and/or by removing at least one (406) of the one or more labeled objects (404, 406) from the first image (408), and
      ◦ generating (204c) a third image (412) of the respective image triple by spatially augmenting the first image (408);

   • training the instance segmentation model (414) using each image triple of the plurality of image triples, wherein training the instance segmentation model (414) using a respective image triple of the plurality of image triples comprises:

      ◦ generating (206a) a first instance segmentation prediction (416) by inputting the first image (408) of the respective image triple into the instance segmentation model (414),
      ◦ generating (206b) a second instance segmentation prediction (418) by inputting the second image (410) of the respective image triple into the instance segmentation model (414),
      ◦ generating (206c) a third instance segmentation prediction (420) by inputting the third image (412) of the respective image triple into the instance segmentation model (414),
      ◦ determining (206d) a first loss value (422) representing an embedding loss of the first instance segmentation prediction (416) and the second instance segmentation prediction (418),
      ◦ determining (206e) a second loss value (424) representing a regularization loss of the first instance segmentation prediction (416) and the third instance segmentation prediction (418), wherein the first instance segmentation prediction represents pseudo-labels, and
      ◦ training (206f) the instance segmentation model (414) using the first loss value (422) and the second loss value (424).

2. The method (200) according to claim 1,

   wherein generating (204a) the first image (408) of the respective image triple comprises: augmenting at least one of the one or more labeled objects prior to inclusion into the unlabeled image; and/or
   wherein generating (204b) the second image (410) of the respective image triple by including the one or more additional labeled objects comprises: augmenting at least one of the one or more additional labeled objects prior to inclusion into the first image.

3. The method (200) according to claim 2,
wherein augmenting the at least one labeled object of the one or more labeled objects and/or at least one labeled object of the one or more additional labeled objects comprises one or more of: changing a scale and/or a position and/or a color of the at least one labeled object, rotating and/or cropping the at least one labeled object, and/or flipping the at least one labeled object.

4. The method (200) according to any one of claims 1 to 3,
wherein the plurality of labeled images (304) comprises a first number of images and the plurality of unlabeled images (306) comprises a second number of images, wherein the second number is at least nine times the first number.

5. The method (200) according to any one of claims 1 to 4,
wherein including a respective object of the one or more labeled objects into the unlabeled image and/or a respective object of the one or more additional labeled objects into the first image comprises:

   • determining a position at which the respective object is to be included according to a predefined probability distribution, and
   • including the respective object at the position.

6. The method (200) according to any one of claims 1 to 5,
wherein including a respective object of the one or more labeled objects into the unlabeled image and/or a respective object of the one or more additional labeled objects into the first image comprises:

   • determining a position at which the respective object is to be included such that a respective overlap between the respective object and each object represented by the unlabeled image is equal to or less than a predefined threshold value, and
   • including the respective object at the position.

7. The method (200) according to any one of claims 1 to 6,
wherein spatially augmenting the first image comprises one or more of: a color jitter, a Planckian jitter, a Gaussian blur, and/or changing a color scale.

8. The method (200) according to any one of claims 1 to 7,

   wherein the first instance segmentation prediction (416) comprises a plurality of class labels with a respective class label of the plurality of class labels for each object instance of a plurality of object instances, wherein the respective class label is associated with a corresponding prediction-score;
   wherein training the instance segmentation model (414) using the respective image triple further comprises:

   • determining a first subset of class labels from the plurality of class labels which have a corresponding prediction-score equal to or greater than a predefined prediction-score threshold value, and
   • determining, from the first subset of class labels, a second subset of class labels according to a predefined quantile of highest prediction-scores, wherein the second subset of class labels represents class labels of the pseudo-labels; and

   wherein the predefined prediction-score threshold value and the predefined quantile increase during training the instance segmentation model (414).

9. The method (200) according to any one of claims 1 to 7,

   wherein the first instance segmentation prediction (416) comprises a plurality of class labels with a respective class label of the plurality of class labels for each object instance of a plurality of object instances, wherein the respective class label is associated with a corresponding prediction-score;
   wherein training the instance segmentation model (414) using the respective image triple further comprises:

   • determining, from the plurality of class labels, a first subset of class labels according to a predefined quantile of highest prediction-scores, and

• determining a second subset of class labels from the first subset of class labels which have a corresponding prediction-score equal to or greater than a predefined prediction-score threshold value, wherein the second subset of class labels represents class labels of the pseudo-labels; and

wherein the predefined prediction-score threshold value and the predefined quantile increase during training the instance segmentation model (414).

10. The method (200) according to any one of claims 1 to 9,

wherein the first instance segmentation prediction (416) comprises a respective mask and a respective bounding box for each object instance of a plurality of object instances;
wherein training the instance segmentation model (414) using the respective image triple further comprises:

• for each object instance, determining a respective pseudo-bounding box bounding the respective mask, wherein the pseudo-label of a respective object instance comprises the respective pseudo-bounding box.

11. The method (200) according to any one of claims 1 to 10,

wherein the first instance segmentation prediction (416) comprises a respective prediction for each object instance of a first plurality of object instances;
wherein the second instance segmentation prediction (418) comprises a respective prediction for each object instance of a second plurality of object instances;
wherein the third instance segmentation prediction (420) comprises a respective prediction for each object instance of a third plurality of object instances;
wherein, during training of the instance segmentation model (414), no non-maximum suppression is applied to the first plurality of object instances and/or the second plurality of object instances and/or the third plurality of object instances.

12. A method for controlling a robot device (101), the method comprising:

• training an instance segmentation model (414) according to the method (200) of any one of claims 1 to 11;
• acquiring an image showing one or more objects;
• feeding the image into the instance segmentation model (414) to detect the one or more objects; and
• controlling the robot device taking into account the detected one or more objects.

13. A data processing device configured to carry out the method of any one of claims 1 to 11.

14. A computer program comprising instructions which, when executed by a computer, causes the computer to carry out the method according to any one of claims 1 to 11.

15. A computer-readable medium comprising instructions which, when executed by a computer, causes the computer to carry out the method according to any one of claims 1 to 11.

Fig. 1

# Fig. 2

# Fig. 3

# Fig. 4

# Fig. 5

500

Europäisches Patentamt

European Patent Office

Office européen des brevets

## EUROPEAN SEARCH REPORT

**Application Number**

EP 24 16 9473

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SRIVASTAV VINKLE ET AL: "Unsupervised domain adaptation for clinician pose estimation and instance segmentation in the operating room", MEDICAL IMAGE ANALYSIS, OXFORD UNIVERSITY PRESS, OXOFRD, GB, vol. 80, 3 July 2022 (2022-07-03), XP087123542, ISSN: 1361-8415, DOI: 10.1016/J.MEDIA.2022.102525 [retrieved on 2022-07-03] * Sections 1 and 3 * | 1-15 | INV. G06V10/26 G06V10/774 G06F18/214 |
| A | WO 2023/047091 A1 (UCL BUSINESS LTD [GB]) 30 March 2023 (2023-03-30) * pages 10-21 * | 1-15 | |
| A | YANG JIAWEI ET AL: "TumorCP: A Simple but Effective Object-Level Data Augmentation for Tumor Segmentation", 21 September 2021 (2021-09-21), 20210921, PAGE(S) 579 - 588, XP047610932, [retrieved on 2021-09-21] * Sections 1-3 * | 1-15 | |
| L | MOSHE KIMHI ET AL: "Robot Instance Segmentation with Few Annotations for Grasping", ARXIV.ORG, CORNELL UNIVERSITY LIBRARY, 201 OLIN LIBRARY CORNELL UNIVERSITY ITHACA, NY 14853, 1 July 2024 (2024-07-01), XP091805689, * the whole document * | | |

| | |
|---|---|
| | **TECHNICAL FIELDS SEARCHED (IPC)** |
| | G06F G06V |

The present search report has been drawn up for all claims

| Place of search | Date of completion of the search | Examiner |
|---|---|---|
| The Hague | 19 September 2024 | Miclea, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 9473

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2024

| Patent document cited in search report | Publication date | Patent family member(s) | Publication date |
|---|---|---|---|
| WO 2023047091 A1 | 30-03-2023 | NONE | |

For more details about this annex : see Official Journal of the European Patent Office, No. 12/82